**Europäisches Patentamt**

**European Patent Office**

**Office européen des brevets**

(19)

(11) Numéro de publication: **0 236 178**
**A1**

## (12) DEMANDE DE BREVET EUROPEEN

(21) Numéro de dépôt: **87400186.0**

(22) Date de dépôt: **27.01.87**

(51) Int. Cl.⁴: **F 16 D 35/00,** B 60 K 17/34

(30) Priorité: **31.01.86 FR 8601363**

(43) Date de publication de la demande: **09.09.87**
**Bulletin 87/37**

(84) Etats contractants désignés: **AT BE DE ES GB IT NL SE**

(71) Demandeur: **REGIE NATIONALE DES USINES RENAULT,**
**Boîte postale 103 8-10 avenue Emile Zola,**
**F-92109 Boulogne-Billancourt (FR)**

(72) Inventeur: **Renaudin, Alain, 24, rue Kepler Elancourt,**
**F-78310 Maurepas (FR)**

(74) Mandataire: **Chassagnon, Jean-Alain et al, REGIE**
**NATIONALE DES USINES RENAULT (S.0267),**
**F-92109 Boulogne-Billancourt Cédex09 (FR)**

(54) **Dispositif de transmission à quatre roues motrices.**

(57) Dispositif de transmission à quatre roues motrices, caractérisé en ce qu'il comporte un arbre secondaire (2), qui est lié
à l'entrée du différentiel central (4); une sortie dudit différentiel
central (4) entraînant le pignon d'attaque (3) de l'essieu avant
coaxial et se montant à l'intérieur dudit arbre secondaire (2),
ledit pignon d'attaque entraînant une couronne (29) solidaire
du différentiel avant; l'autre sortie du différentiel central (4)
entraînant un arbre de renvoi arrière (15) coaxial et dans le prolongement dudit pignon d'attaque (3).

EP 0 236 178 A1

ACTORUM AG

# DISPOSITIF DE TRANSMISSION A QUATRE ROUES MOTRICES

La présente invention se rapporte à un dispositif de transmission à quatre roues motrices, qui s'appliquent notamment sur les véhicules de tourisme automobile.

On connaît de nombreux dispositifs à quatre roues motrices, qui comprennent une boîte de mécanisme en sortie de la boîte de vitesses, afin de transmettre le mouvement à l'essieu avant, et à l'essieu arrière. Chaque essieu comporte un différentiel disposé entre les roues, et qui reçoit le mouvement de la boîte de mécanisme. Certain dispositif offre de plus la présence d'un différentiel entre l'essieu avant et l'essieu arrière, ce différentiel étant disposé immédiatement en sortie de la boîte de mécanisme. Afin de ne pas augmenter considérablement la consommation de carburant, ces mécanismes permettent de fonctionner soit en deux roues motrices soit en quatre roues motrices. C'est pourquoi une commande à la disposition du conducteur permet de passer en quatre roues motrices. Ces dispositifs présentent l'inconvénient, lorsque l'on ait en deux roues motrices, de présenter un risque de perte d'adhérence sur une roue. Dans ce cas le conducteur du véhicule doit craboter très rapidement la transmission du véhicule en quatre roues motrices. Cette manoeuvre de crabotage doit être faite à l'arrêt ou à très faible vitesse. De ce fait la manipulation de ces dispositifs à quatre roues motrices est très difficile, et de plus il est très délicat de la réaliser au meilleur moment. Enfin ce type de transmission demande au conducteur du véhicule une attention soutenue, qui s'effectue au détriment de la sécurité de la conduite.

Le but de la présente invention est de proposer un dispositif de transmission à quatre roues motrices, qui permet de rendre la manoeuvre de crabotage en quatre roues motrices automatique ; le dispositif s'adaptant parfaitement aux conditions d'adhérence de chacune des roues du véhicule. De plus le dispositif de transmission selon l'invention doit avoir une architecture, qui s'adapte très facilement aux nouvelles structures des véhicules automobiles.

A cet effet, le dispositif de transmission à quatre roues motrices selon l'invention comporte un arbre secondaire, qui est lié à l'entrée d'un différentiel central. Une sortie dudit différentiel central entraîne le pignon d'attaque de l'essieu avant coaxial, et se monte à l'intérieur dudit arbre secondaire, ledit pignon d'attaque entraînant une couronne solidaire du différentiel avant. L'autre sortie du différentiel central entraîne un arbre de renvoi arrière coaxial et dans le prolongement dudit pignon d'attaque.

Selon un mode de réalisation de l'invention, un système auto-freiné est disposé sur les sorties de mouvement du différentiel central.

Selon un mode de réalisation de l'invention, un système auto-freiné est disposé sur les sorties de mouvement du différentiel avant.

Selon un mode de réalisation de l'invention, un système auto-freiné est disposé sur les sorties de mouvement du différentiel de l'essieu arrière.

Selon un mode de réalisation de l'invention, le système auto-freiné est un système visqueux.

Selon un mode de réalisation de l'invention, le système auto-freiné est un ensemble mécanique à rondelles de précharge.

Selon un mode de réalisation de l'invention, le système auto-freiné est un ensemble mécanique à ressort axiaux de compression.

Selon un mode de réalisation de l'invention, le moteur et la boîte de vitesses sont disposés longitudinalement dans le véhicule.

Selon un mode de réalisation de l'invention, le système visqueux comprend un ensemble multi-disques avec un fluide à viscosité contrôlée, qui est enfermé par un moyeu de fermeture et ayant des moyens d'étanchéité.

Selon un mode de réalisation de l'invention, le système visqueux disposé sur le différentiel central a :

- son moyeu solidaire de l'arbre de renvoi arrière lié au planétaire dudit différentiel central :

- sa couronne lié au porte-satellites dudit différentiel central ;

- son flasque d'appui solidaire de la couronne ;

- son flasque de fermeture ;

- ses moyens d'étanchéité, qui consistent en deux joints disposés respectivement entre ledit moyeu et ledit flasque d'appui d'une part ; et un joint disposé entre ledit flasque de fermeture et ladite couronne.

Selon un mode de réalisation de l'invention, le système visqueux disposé sur le différentiel central a :

- son moyeu solidaire du pignon d'attaque, qui est lié au planétaire dudit différentiel central ;

- sa couronne lié au porte-satellites dudit différentiel central ;

- son flasque d'appui solidaire de la couronne ;

- son flasque de fermeture solidaire de l'arbre de renvoi arrière et lié à ladite couronne ;

- ses moyens d'étanchéité qui consistent en deux joints disposés respectivement entre ledit moyeu et ledit flasque d'appui d'une part et ledit flasque de fermeture d'autre part ; et un joint disposé entre ledit flasque de fermeture et ladite couronne.

Selon un mode de réalisation de l'invention, l'arbre de renvoi arrière est lié à l'arbre de transmission au moyeu d'un plateau d'accouplement.

Selon un mode de réalisation de l'invention, le carter de boîte de vitesses porte un carter arrière, qui reçoit un flasque de fermeture portant le roulement de l'arbre de renvoi arrière, qui est supporté par l'extrémité du pignon d'attaque au moyen d'un roulement à aiguilles.

Le dispositif de transmission à quatre roues motrices selon l'invention présente ainsi l'avantage d'offrir une grande sécurité. En effet, en cas de perte d'adhérence de l'une quelconque des roues, la transmission passe immédiatement en quatre roues motrices. L'attention du conducteur peut ainsi se consacrer uniquement à la conduite de son véhicule, ce qui augmente considérablement la sécurité surtout en cas de mauvaises conditions climatiques. De plus l'ensemble du dispositif permet de résoudre les problèmes posés par l'architecture du véhicule, et offre plus de souplesse dans la disposition possible des différents organes mécaniques.

D'autres caractéristiques et avantages de la présente invention ressortiront de la description qui suit de mode de réalisation donné à titre d'exemples en référence aux dessins annexés sur lesquels :

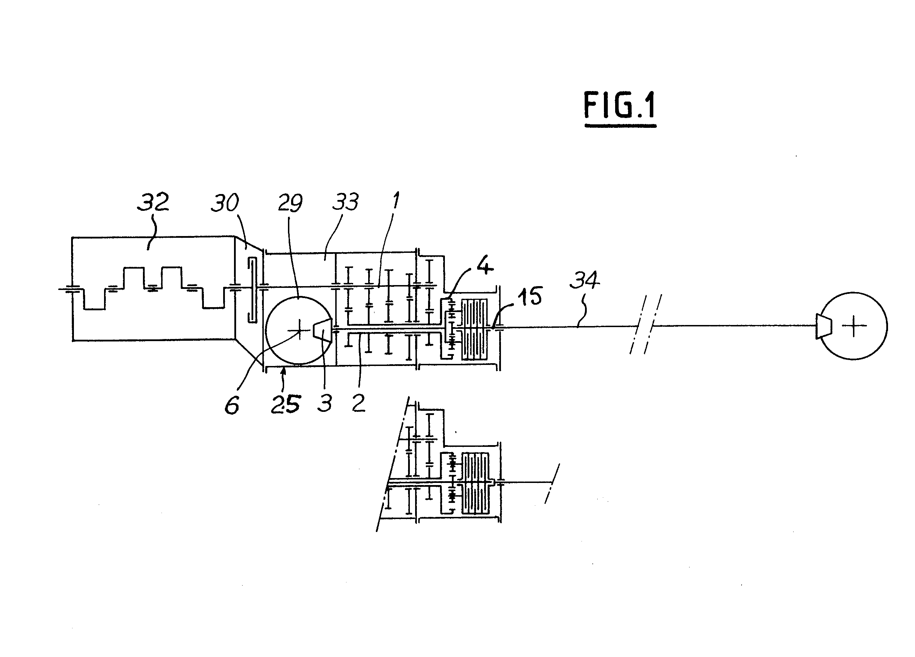

- la figure 1 est une vue longitudinale schématique de l'ensemble de la transmission selon l'invention ;

- la figure 2 est une vue en coupe partielle correspondant à la figure 1 ;

- la figure 3 est une vue en coupe partielle correspondant à la figure 1 d'un autre mode de réalisation de l'invention ;

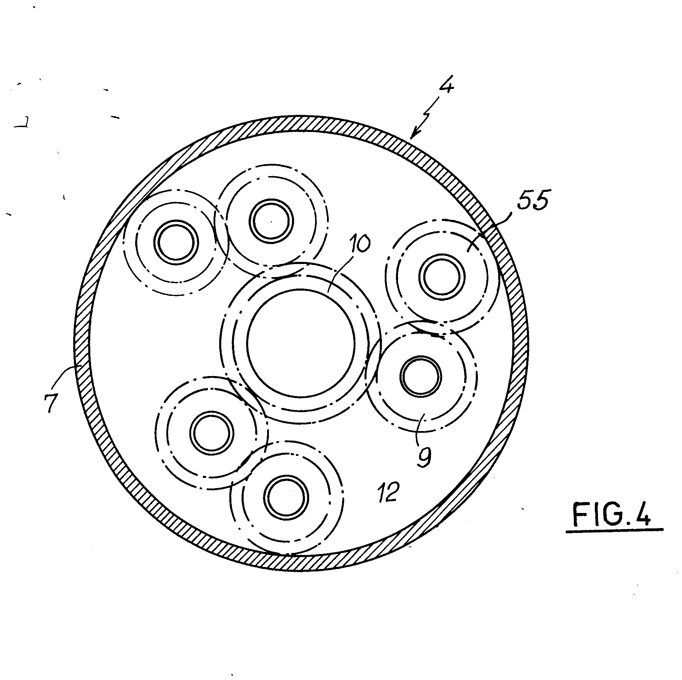

- la figure 4 est une vue suivant IV de la figure 2.

Le dispositif de transmission à quatre roues motrices selon l'invention est disposé à la sortie d'une boîte de vitesses 33, qui est entraînée par un moteur 32. Dans le cas des figures, cet ensemble moteur 32 boîte de vitesses 33 est disposé longitudinalement dans le véhicule. Il faut noter également que dans le cas des figures, le dispositif selon l'invention est monté sur un groupe moto-propulseur disposé à l'avant du véhicule. Il est évident que ce dispositif pourrait s'appliquer à un groupe moto-propulseur disposé à l'arrière, et dans ce cas tout ce que l'on appelera essieu avant et essieu arrière dans la suite de la description deviendrait réciproquement essieu arrière et essieu avant.

L'embrayage est disposé dans un carter 30 d'embrayage, qui est fixé sur le moteur 32. Le carter 30 d'embrayage porte un carter 25 de boîte de vitesses 33. Le carter 25 de boîte de vitesses 33 porte un carter arrière 26, qui reçoit un flasque de fermeture 27. L'ensemble du dispositif selon l'invention est disposé dans les carters 25, 26 et 27.

La boîte de vitesses 33 comporte un arbre primaire 1 et un arbre secondaire 2. L'arbre secondaire 2 est lié à l'entrée du différentiel central (4, 39). Une sortie de mouvement du différentiel central 4 entraîne le pignon d'attaque 3 de la couronne 29 de l'essieu avant dont l'axe est référencé 6. L'autre sortie de mouvement du différentiel central (4, 39) entraîne le plateau d'accouplement 38 solidaire de l'arbre de transmission 34.

Un système auto-freiné est disposé entre les sorties de mouvement du différentiel central (4, 39), de manière à pouvoir transférer automatiquement une partie de l'énergie de l'essieu qui se trouverait en perte d'adhérence sur l'autre essieu.

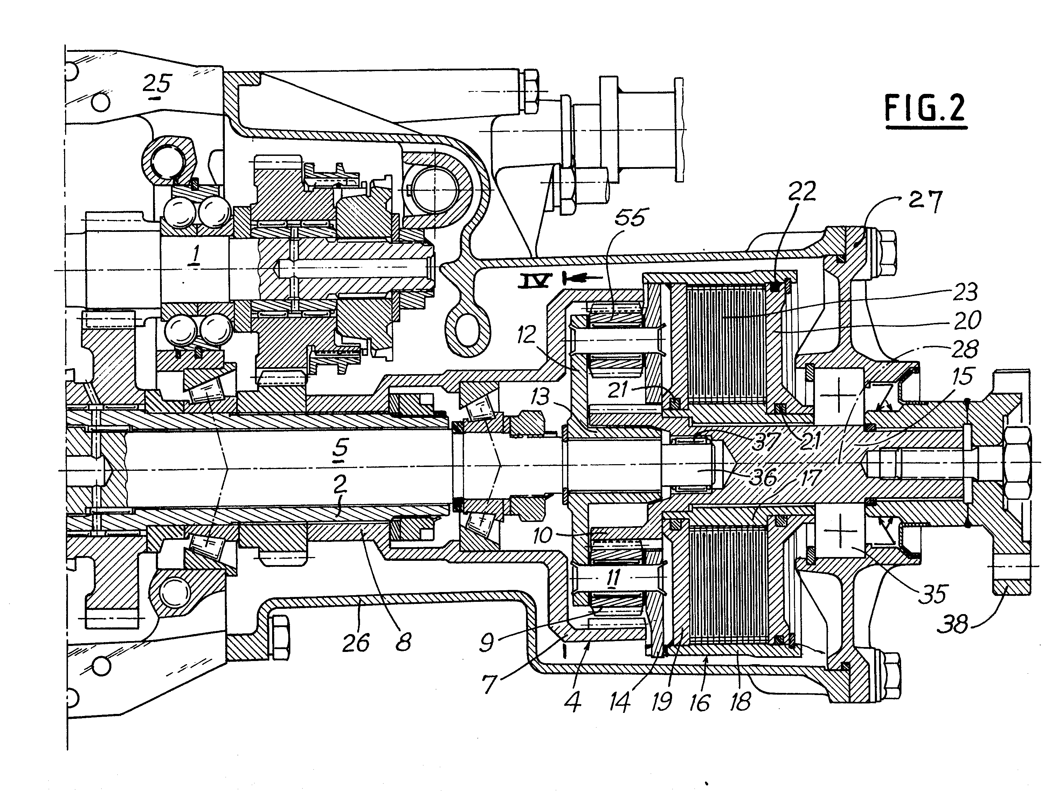

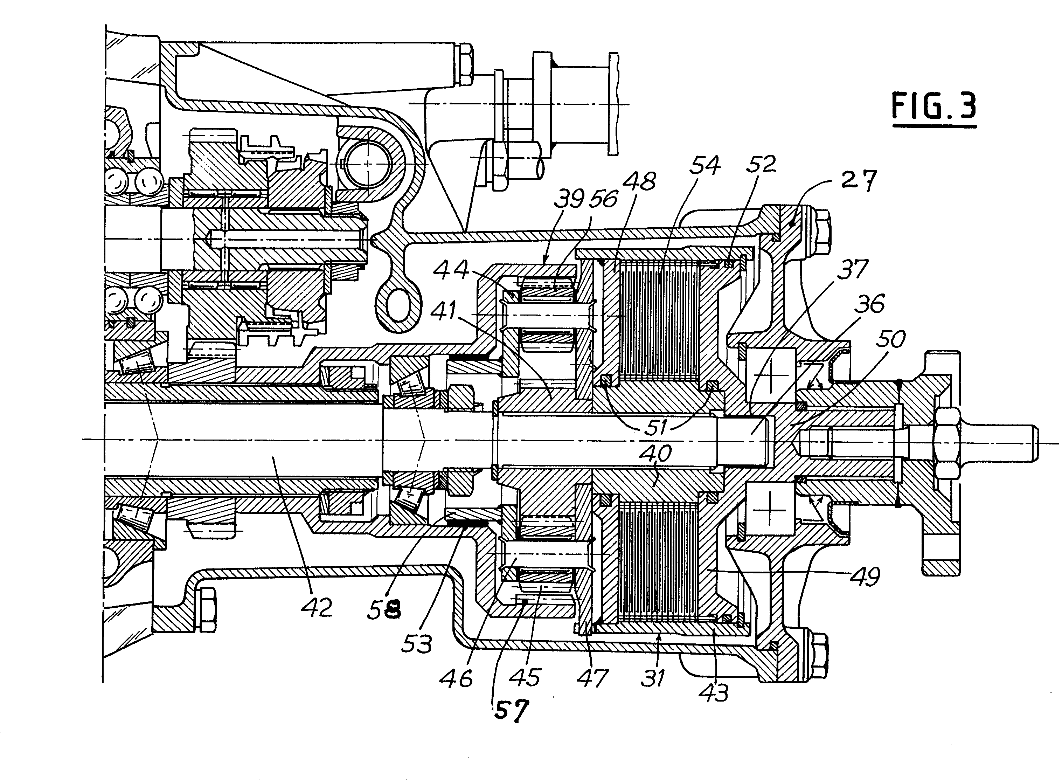

Dans le cas des figures, le système auto-freiné est un système visqueux 16 pour la figure 2 et un système visqueux 31 pour la figure 3. On pourrait également monter un système auto-freiné du type ensemble mécanique à rondelles de précharge. On pourrait également prévoir comme système auto-freiné un ensemble mécanique à ressorts axiaux de compression.

Un système auto-freiné est disposé entre les sorties de mouvement du différentiel avant.

De la même manière un système auto-freiné est disposé entre les sorties de mouvement du différentiel de l'essieu arrière.

De même que pour le système auto-freiné disposé entre les sorties du différentiel central 4, 39, le système auto-freiné disposé entre les sorties

- 6 -

0236178

du différentiel avant ou entre les sorties du différentiel de l'essieu arrière, ces systèmes auto-freiné sont un système visqueux. On pourrait également prévoir un système auto-freiné du type ensemble mécanique à rondelles de précharge. On pourrait également prévoir un système auto-freiné du type ensemble mécanique à ressorts axiaux de compression.

Dans le mode de réalisation de l'invention représenté sur la figure 2, l'arbre secondaire 2 de la boîte de vitesses 33 est solidaire du moyeu 8 de la couronne 7 du différentiel central 4. Une première sortie de mouvement du différentiel central 4 s'effectue par le porte-satellites 12 dudit différentiel central 4. Ce porte-satellites 12 est solidaire d'un axe secondaire 5, qui est coaxial à l'arbre secondaire 2. Cet axe secondaire 5 passe à l'intérieur de l'arbre secondaire 2, et il se termine par le pignon d'attaque 3. L'autre sortie de mouvement du différentiel central 4 s'effectue par le planétaire 10, qui est solidaire de l'arbre de renvoi arrière 15. Cet arbre de renvoi arrière 15 est lui-même solidaire en rotation au moyen de cannelures du plateau d'accouplement 38. Cet arbre de renvoi arrière 15 est supporté d'une part par un roulement 35 monté dans le flasque de fermeture 27, et d'autre part par l'extrémité 36 du pignon d'attaque 3 et de l'axe secondaire 5 au moyen d'un roulement à aiguilles 37.

Les satellites 9 et 55 du différentiel central 4 sont montés sur des axes 11, qui sont supportés par le porte-satellites 12 et par un flasque d'entraînement 14. Le porte-satellites 12 est solidaire de l'axe secondaire 5 par l'intermédiaire de son moyeu 13 qui est lié audit axe secondaire 5 au moyen de cannelures. Les groupes de satellites 55 engrainent d'une par avec des groupes correspondants de satellites 9, et d'autre part avec la couronne 7 du différentiel central 4. Les groupes de satellites 9 engrainent à leur tour avec le planétaire 10.

Le système visqueux 16 disposé entre les sorties de mouvement du différentiel central 4, est aménagé dans le prolongement dudit différentiel central 4, et à l'intérieur du carter arrière 26. Dans le mode de réalisation représenté sur la figure, le système visqueux 16 a :

- son moyeu 17 qui est solidaire de l'arbre de renvoi arrière 15 lié au planétaire 10 dudit différentiel central 4 ;

- sa couronne 18 qui est liée au flasque d'entraînement 14 du porte-satellites 12 dudit différentiel central 4 ;

- son flasque d'appui 19 qui est solidaire de la couronne 18 ;

- son flasque de fermeture 20 ;

- ses moyens d'étanchéités consistent en deux joints 21, qui sont disposés respectivement entre ledit moyeu 17 et ledit flasque 19 d'une part, et ledit flasque de fermeture 20 d'autre part ; et un joint 22 disposé entre ledit flasque de fermeture 20 et ladite couronne 18.

Selon un mode de réalisation de l'invention représenté à la figure 3 l'arbre secondaire 2 est solidaire de l'entrée de mouvement du différentiel central 39, qui se fait par la couronne 57. Une sortie de mouvement du différentiel central 39 se fait par le planétaire 41 qui est solidaire d'un axe secondaire 42 coaxial l'arbre secondaire 2, et passant à l'intérieur de cet arbre secondaire 2. L'axe secondaire se termine par le pignon d'attaque 3. L'autre sortie de mouvement du différentiel central 39 se fait par le porte-satellites 44 dudit différentiel central 39.

le porte-satellites 44 est monté à l'intérieur du moyeu de la couronne 57, par l'intermédiaire de son moyeu 58. Les satellites 45 et 56 du différentiel central 39 sont montés sur des axes 46 supportés par le porte-satellites 44 et par le flasque d'entraînement 47. De plus une bague 53 est interposée entre le moyeu 58 et la couronne 57.

Un arbre de renvoi arrière 50 est lié à l'arbre de transmission 34 au moyen du plateau d'accouplement 38. Cet arbre de renvoi arrière 50 est supporté par un roulement 35 monté dans le flasque de fermeture 27. Cet arbre de renvoi arrière 50 est également supporté par l'extrémité 36 du pignon d'attaque 3 et de l'axe secondaire 42 au moyen d'un roulement à aiguilles 37.

Le système visqueux 31 disposé entre les sorties de mouvement du différentiel central 39, est aménagé, dans le prolongement dudit différentiel central 39, et à l'intérieur du carter arrière 26. Dans le mode de réalisation représenté sur la figure 3, le système visqueux 31 a :

- son moyeu 40 solidaire du pignon d'attaque 3 par l'intermédiaire de l'axe secondaire 42, qui est lié au planétaire 41 dudit différentiel central 39 ;

- sa couronne 43 qui est liée au flasque d'entraînement 47 du porte-satellites 44 dudit différentiel central 39 ;

- son flasque d'appui 48 solidaire de la couronne 43 ;

- son flasque de fermeture 49 solidaire de l'arbre de renvoi arrière 50 et lié à ladite couronne 43 ;

- ses moyens d'étanchéité, qui consistent en deux joints 51 qui sont disposés respectivement entre le moyeu 40, et ledit flasque d'appui 48 d'une part, et ledit flasque de fermeture 49 d'autre part ; et un joint 52 disposé entre ledit flasque de fermeture 49 et ladite couronne 43.

## REVENDICATIONS

1. Dispositif de transmission à quatre roues motrices, caractérisé en ce qu'il comporte un arbre secondaire (2), qui est lié à l'entrée du différentiel central (4) ; une sortie dudit différentiel central (4) entraînant le pignon d'attaque (3) de l'essieu avant coaxial et se montant à l'intérieur dudit arbre secondaire (2), ledit pignon d'attaque (3) entraînant une couronne (29) solidaire du différentiel avant ; l'autre sortie du différentiel central (4) entraînant un arbre de renvoi arrière (15) coaxial et dans le prolongement dudit pignon d'attaque (3).

2. Dispositif de transmission à quatre roues motrices selon la revendication 1, caractérisé en ce qu'un système auto-freiné est disposé sur les sorties de mouvement du différentiel central (4).

3. Dispositif de transmission à quatre roues motrices selon la revendication 1, caractérisé en ce qu'un système auto-freiné est disposé sur les sorties de mouvement du différentiel avant.

4. Dispositif de transmission à quatre roues motrices selon la revendication 1, caractérisé en ce qu'un système auto-freiné est disposé sur les sorties de mouvement du différentiel de l'essieu arrière.

5. Dispositif de transmission à quatre roues motrices selon l'une quelconque des revendications précédentes, caractérisé en ce que le système auto-freiné est un système visqueux (16, 31).

6. Dispositif de transmission à quatre roues motrices selon l'une des revendications 1, 2, 3 et 4, caractérisé en ce que le système auto-freiné est un ensemble mécanique à rondelles de précharge.

7. Dispositif de transmission à quatre roues motrices selon l'une des revendications 1, 2, 3 et 4, caractérisé en ce que le système auto-freiné est un ensemble mécanique à ressort axiaux de compression.

8. Dispositif de transmission à quatre roues motrices selon l'une quelconque des revendications précédentes, caractérisé en ce que le moteur (32) et la boîte de vitesses (33) sont disposés longitudinalement dans le véhicule.

9. Dispositif de transmission à quatre roues motrices selon les revendication 5 et 8, caractérisé en ce que le système visqueux (16, 31) comprend un ensemble multi-disques (23, 54) avec un fluide à viscosité contrôlée, qui est enfermé par un flasque de fermeture (20, 49) ayant des moyens d'étanchéité.

10. Dispositif de transmission à quatre roues motrices selon la revendication 9, caractérisé en ce que le système visqueux (16) disposé sur le différentiel central (4) a :

- son moyeu (17) solidaire de l'arbre de renvoi arrière (15) lié au planétaire (10) dudit différentiel central (4) ;

- sa couronne (18) liée au flasque d'entraînement (14) du porte-satellites (12) dudit différentiel central (4) ;

- son flasque de fermeture (20) ;

- ses moyens d'étanchéité, qui consistent en deux joints (21) disposés respectivement entre ledit moyeu (17) et ledit flasque d'appui (19) d'une part et ledit flasque de fermeture (20) d'autre part ; et un joint (22) disposé entre ledit flasque de fermeture (20) et ladite couronne (18).

11. Dispositif de transmission à quatre roues motrices selon la revendication 9, caractérisé en ce que le système visqueux (31) disposé sur le différentiel central (39) a :

- son moyeu (40) solidaire du pignon d'attaque (42), qui est lié au planétaire (41) dudit différentiel central (39) ;

- sa couronne (43) lié au flasque d'entraînement (47) du porte-satellites (44) dudit différentiel central (39) ;

- son flasque d'appui (48) solidaire de la couronne (43) ;

- son flasque de fermeture (49) solidaire de l'arbre de renvoi arrière (50) et lié à ladite couronne (43) ;

- ses moyens d'étanchéité qui consistent en deux joints (51) disposés respectivement entre ledit moyeu (40) et ledit flasque d'appui (48) d'une part, et ledit flasque de fermeture (49) d'autre part ; et un joint (52) disposé entre ledit flasque de fermeture (49) et ladite couronne (43).

12. Dispositif de transmission à quatre roues motrices selon l'une des revendications 10 et 11, caractérisé en ce que l'arbre de renvoi arrière (15, 50) est lié à l'arbre de transmission (34) au moyeu d'un plateau d'accouplement (38).

13. Dispositif de transmission à quatre roues motrices selon la revendication 1, caractérisé en ce que le carter (25) de boîte de vitesses porte un carter arrière (26), qui reçoit un flasque de fermeture (27) portant le roulement (35) de l'arbre de renvoi arrière (15, 50) qui est supporté par l'extrémité (36) du pignon d'attaque (3) au moyeu d'un roulement à aiguilles (37).

FIG.1

0236178

1/4

FIG.2

FIG.3

FIG.4

**Office européen des brevets**

## RAPPORT DE RECHERCHE EUROPEENNE

EP  87 40 0186

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl.4) |
| X | GB-A-2 057 987  (A.C. SILVERTON)<br><br>* En entier * | 1,2,5, 8,9,11 | F 16 D  35/00<br>B 60 K  17/34 |
| A | | 13 | |
| | --- | | |
| X | BE-A- 640 950  (F.N. MALOOF)<br><br>* Revendications 1-4; figures * | 1,2,7, 8 | |
| A | | 13 | |
| | --- | | |
| X | US-A-2 821 868  (B.F. GREGORY)<br>* En entier * | 1,2,8 | |
| A | | 5-7 | **DOMAINES TECHNIQUES RECHERCHES (Int. Cl.4)** |
| X | FR-A-1 431 408  (TATRA NARODNI PODNIK)<br>* En entier * | 1,8 | B 60 K<br>F 16 D<br>F 16 H |
| | --- | | |
| X | GB-A- 453 912  (DAIMLER-BENZ AG)<br>* En entier * | 1,8 | |
| | --- | | |
| A | EP-A-0 068 309  (H. FERGUSON LTD)<br>* Figures * | 4,5 | |
| | ---                    -/- | | |

Le présent rapport de recherche a été établi pour toutes les revendications

| Lieu de la recherche<br>LA HAYE | Date d'achèvement de la recherche<br>29-04-1987 | Examinateur<br>FRANKS B.G. |
|---|---|---|

OEB Form 1503 03 82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen
des brevets

**RAPPORT DE RECHERCHE EUROPEENNE**

| | **DOCUMENTS CONSIDERES COMME PERTINENTS** | | Page   2 | |
|---|---|---|---|---|
| Catégorie | Citation du document avec indication. en cas de besoin. des parties pertinentes | Revendication concernée | CLASSEMENT DE LA DEMANDE (Int. Cl.4) | |
| A | DESIGN ENGINEERING, février 1981, pages 49-50, London, GB: "Viscous coupling development for automotive transmissions" * Page 50, colonne 2, lignes 23-27 * | 3,5,9 | | |
| | --- | | | |
| A | US-A-4 245 525  (M.K. LEBEGUE) * Figures; abrégé * | 6 | | |
| | ----- | | | |
| | | | DOMAINES TECHNIQUES RECHERCHES (Int. Cl.4) | |

Le présent rapport de recherche a été établi pour toutes les revendications

| Lieu de la recherche LA HAYE | Date d'achèvement de la recherche 29-04-1987 | Examinateur FRANKS B.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82